# EUROPEAN PATENT APPLICATION

(11) **EP 4 378 857 A1**
(43) Date of publication of application: **05.06.2024**
(21) Application number: 22849435.7
(22) Date of filing: 25.07.2022
(51) Int. Cl.: B65D 81/34

(54) **LABEL AND CONTAINER**

(30) Priority: 29.07.2021 JP 2021124142
(71) Applicant: Osaka Sealing Printing Co., Ltd., Osaka-shi, Osaka 543-0028 (JP)
(72) Inventor: FURUSAWA, Hiroki, Osaka-shi, Osaka 543-0028 (JP)
(74) Representative: Ter Meer Steinmeister & Partner
(86) International application number: PCT/JP2022/028633
(87) International publication number: WO 2023/008374

(57) **Abstract**

A label is provided that includes layers; a base film, a thermal layer, and a heat-shrinkable layer. This label is adhered to the top seal of a container. When this label-adhered container is heated in a microwave oven, the thermal layer generates heat through microwave absorption, and heat thus generated serves to heat and soften the base film, heat-shrinkable film and top seal. The heat-shrinkable film shrinks under heat, opening notches penetrating through the label. The top seal thus affected by heating is further subject to a stress applied in response to the notches being opened, and a heated and softened portion of the top seal is also affected by an increasingly higher internal pressure. As a result, holes are formed in the top seal.

## Description

### TECHNICAL FIELD

This disclosure relates to a label and a container to which the label is attachable.

### BACKGROUND ART

Among the food products commercially available today are precooked foodstuffs packed in containers and microwaved later before being served. The containers used then include, generally called, top-seal containers. The top-seal container has a piece of film prepared as lid which is adhered by heat sealing to the container's opening edge (for example, patent literature 1).

### CITED REFERENCE

### PATENT LITERATURE

Patent literature 1 Japanese Patent Laying-Open No. 2018-70191

### SUMMARY OF INVENTION

### TECHNICAL PROBLEM

This type of container, however, may involve the risk that the internal pressure of a precooked food container may be overly elevated when heated in a microwave oven by water vapor generated from the heated food inside. This may ultimately break the container, possibly causing the food to scatter around.

To avoid such an internal pressure increase, the top-seal container is conventionally microwaved after the top seal; lid film, is partly peeled off the container's opening edge.

It may be, however, somewhat annoying for users that they always have to thus partly peel off the container's top seal to heat the food. Besides that, users may possibly forget to open the top seal before they heat the food in the container.

To address these issues of the known art, this disclosure is directed to eliminating the need to partly open the top seal before the top-seal container is placed and heated in a microwave oven.

### SOLUTION TO PROBLEM

To this end, this disclosure provides the following technical features.

1] A label of this disclosure has: a base film unshrinkable under heat; and a laminated body at least including a heat-shrinkable film and a thermal layer. The laminated body is disposed on a back-surface side of the base film. The heat-shrinkable film is allowed to shrink under heat, and the thermal layer generates heat through microwave absorption. The label has a notch that penetrates therethrough from the base film on a front-surface side to the heat-shrinkable film of the laminated body.

When the label disclosed herein is adhered to the top seal; a piece of film prepared as lid, of a top-seal container containing, for example, food, the laminated body on the back-surface side of the base film is ready to be joined to the top seal. When any container having the label disclosed herein being adhered to its top seal is heated in a microwave oven, a label-adhered portion of the top seal is heated more aggressively than the other portions. As a result, holes are formed in this portion, through which water vapor generated from the heated contents may be successfully discharged.

The formation of these holes is considered to occur in this label-adhered portion of the top seal as follows.

When any container having the label disclosed herein being adhered to its top seal is heated in a microwave oven, the thermal layer of the laminated body generates heat through microwave absorption before the container's internal pressure starts to rise. The heat thus generated serves to heat and soften the base film and the heat-shrinkable film, further serving to heat and soften the top seal as well.

Then, the heat-shrinkable film starts to shrink under heat. The notch that extends from the base film on the front-surface side to the heat-shrinkable film of the laminated body, however, splits and opens in response to the shrinkage of the heat-shrinkable film, and the notch in the base film correspondingly opens. As the notch formed in the heat-shrinkable film is thus opening, a stress is applied to and is acted upon a heated and softened portion of the top seal that corresponds to the notch. This portion of the top seal is also subject to an increasingly higher internal pressure which is elevated by water vapor generated from the heated contents. The heated and softened portion of the top seal corresponding to the notch is then further damaged by these events, which eventually results in the formation of holes in this portion. Then, water vapor generated from the heated contents is discharged out of the label through the holes and the opened notch of the label.

As described above, when any container having the label disclosed herein being adhered to its top seal is heated in a microwave oven, heat may serve to soften and weaken the label-adhered portion of the top seal, and holes may be formed under the actions of a stress applied in response to the label's notch being gradually opened and of an increasingly higher internal pressure. Thus, water vapor generated from the heated contents may be successfully discharged through these holes and the opened notch of the label.

Any container having a top seal to which the label disclosed herein has been adhered may successfully dispense with such a troublesome labor as always having to partly peel off the top seal before microwaving the container. Conventionally, users of containers of the known art may happen to forget this routine work before heating, which may involve the risk of breakage or damage of the containers. According to the container disclosed herein, holes may be formed in the label-adhered portion of the tops seal, and water vapor generated from the heated contents may be discharged through these holes. Thus, the risk of the container being broken or damaged may be avoidable.

2] In one embodiment of this disclosure, the thermal layer of the laminated body is formed between the base film and the heat-shrinkable film.

According to this embodiment, the thermal layer of the laminated body on the back-surface side of the base film is formed between the base film and the heat-shrinkable film. When the label disclosed herein is adhered to the top seal of a top-seal container, the layers of this label and the top seal are arranged in the following order; base film, thermal layer, heat-shrinkable film, and top seal, from the front-surface side (upper side) of the label.

Below is described an assumed reason why the formation of holes is considered to occur in the top seal of any container to which the label disclosed herein has been adhered when the container is heated in a microwave oven.

When the heating starts, the thermal layer of the laminated body generates heat before the container's internal pressure starts to rise. This heat may soften the upper layer; base layer and further soften the lower layers; heat-shrinkable film and top seal. Then, the heated heat-shrinkable film may shrink, opening the notch in this film and also in the base film.

When the heat-shrinkable film below the thermal layer thus shrinks, opening the notch, heat from the thermal layer may be efficiently transmitted, through the notched portion, to the top seal below the heat-shrinkable film. As a result, the top seal may be more aggressively heated and thereby softened. Further, the top seal thus heated and thereby softened may be subject to a stress applied in response to the notch of the heat-shrinkable film being gradually opened and may also be affected by an increasingly higher internal pressure. Then, holes may be formed in the notch-formed portion already softened and weakened under heat. Then, water vapor generated from the heated contents may be discharged out of the label through these holes and the opened notch-formed portion.

3] In other embodiments of this disclosure, the heat-shrinkable film of the laminated body is formed between the base film and the thermal layer.

According to these embodiments, the heat-shrinkable film of the laminated body is formed between the base film and the thermal layer. When the label disclosed herein is adhered to the top seal of a top-seal container, therefore, the layers of this label and the top seal are arranged in the following order; base film, heat-shrinkable film, thermal layer, and top seal, from the front-surface side (upper side) of the label.

Below is described an assumed reason why the formation of holes is considered to occur in the top seal of any container to which the label disclosed herein has been adhered when the container is heated in a microwave oven.

When the heating starts, the thermal layer of the laminated body generates heat before the container's internal pressure starts to rise. This may efficiently heat and soften the top seal below the thermal layer. Then, heat generated from the thermal layer may shrink the upper layer; heat-shrinkable film, opening the notch in this film and also in the base film.

The top seal thus heated and thereby softened may be subject to a stress applied in response to the notch of the heat-shrinkable film being gradually opened and may also be affected by an increasingly higher internal pressure. Then, holes may be formed in the notch-formed portion already softened and weakened under heat. Then, water vapor generated from the heated contents may be discharged out of the label through these holes and the opened notch-formed portion.

4] In a preferred embodiment of this disclosure, the label further includes an adhesive layer for adhesion of the label, and the adhesive layer is formed between the thermal layer and the heat-shrinkable layer of the multilayered body.

According to this embodiment, the heat-shrinkable film of the multilayered body on the back-surface side of the base film is formed between the thermal layer and the base film, and the adhesive layer is formed between the thermal layer and the heat-shrinkable film. When the label disclosed herein is adhered to the top seal of a top-seal container, the layers of this label and the top seal are arranged in the following order; base film, heat-shrinkable film, adhesive layer, thermal layer, and top seal, from the front-surface side (upper side) of the label.

Below is described an assumed reason why the formation of holes is considered to occur in the top seal of any container to which the label disclosed herein has been adhered when the container is heated in a microwave oven.

When any container having the label of this disclosure adhered to its top seal is heated in a microwave oven, the thermal layer of the laminated body first generates heat before the container's internal pressure starts to rise. The thermal layer in direct contact with the container's top seal, therefore, is allowed to directly heat, soften and weaken the top seal. The weakened portion of the top seal may be then subject to a stress applied in response to the notch of the heat-shrinkable film being gradually opened as a result of shrinkage under heat and may also be affected by an increasingly higher internal pressure. This may result in the formation of holes in the notch-corresponding portion. Then, water vapor generated from the heated contents may be discharged out of the label through these holes and the opened-notch portion of the label.

5] In one embodiment of this disclosure, the thermal layer of the laminated body is formed on one surface or another surface of the heat-shrinkable film.

According to this embodiment, the thermal layer of the laminated body is formed on one surface or the other surface of the heat-shrinkable film. When any container having the label of this disclosure being adhered to its top seal is heated in a microwave oven, the thermal layer of the laminated body first generates heat before the container's internal pressure starts to rise. This may directly heat the heat-shrinkable film and allow the heat-shrinkable film to efficiently shrink, successfully opening the notch. The weakened portion of the top seal may be then subject to a stress applied in response to the notch of the heat-shrinkable film being gradually opened as a result of shrinkage and may also be affected by an increasingly higher internal pressure. This may result in the formation of holes in the notch-corresponding portion, inviting water vapor generated from the heated contents to be discharged out of the label through these holes and the opened notch-formed portion of the label.

6] In other embodiments of this disclosure, the base film is greater in area dimension than the laminated body and covers the laminated body, and an outer peripheral edge of the base film extends more outward than the laminated body.

According to these embodiments, the base film on the front-surface side may be used to cover the laminated body, and the outer peripheral edge of the base film may be adhered to the top seal of a top-seal container. Thus, the laminated body including the heat-shrinkable film and the thermal layer may be supported and retained in a stable manner, which may allow two purposes to be fully served; heat generation and shrinkage.

7] In one embodiment of this disclosure, the base film is a first base film, and the first base film is formed on the laminated body. The label further includes a second base film greater in area dimension than the first base film. The second base film covers the first base film and has an outer peripheral edge extending more outward than the first base film. The notch is formed so as to penetrate through the label from the second base film on the front-surface side to the heat-shrinkable film of the laminated body.

According to this embodiment, the first base film formed on the laminated body may prevent unwanted deformation of the heat-shrinkable film of the laminated body when this film shrinks under heat, so that the notch may be smoothly opened. Further advantageously, the label also includes the second base film greater in area dimension than the first base film. This second base film, with its outer peripheral edge being adhered to the top seal of a top-seal container, may be allowed to cover the first base film on the laminated body. Thus, the first base film and the laminated body may be retained in a stable manner, which may allow two purposes to be fully served; heat generation and shrinkage.

8] In other embodiments of this disclosure, the thermal layer is a thermal ink layer that generates heat through microwave absorption.

According to these embodiments, the thermal ink layer absorbs microwave emitted form, for example, a microwave oven and thereby generates heat. When the label is exposed to microwave in a microwave oven, for example, the heat-shrinkable film of the laminated body and the base film may be exposed to heat generated from the thermal ink and thereby heated, and the label-adhered top seal may be thereby heated as well.

9] In other embodiments of this disclosure, the notch extends along a direction that intersects with a direction in which the heat-shrinkable film of the laminated body shrinks under heat.

According to these embodiments, the notch penetrating through the heat-shrinkable film of the laminated body is formed along a direction that intersects with a direction of the heat-induced shrinkage of the heat-shrinkable film of the laminated body. When the heat-shrinkable film shrinks under heat, the notch may be pulled from its both sides under the action of and in the direction of this shrinkage and thereby widely opened. Then, a stress generated when the notch is thus opened may be effectively acted upon the heated and softened top seal.

10] A container disclosed herein includes a body having an opening on an upper side thereof, a top seal joined to the body so as to cover the opening, and the label of this disclosure adherable to the top seal.

When the container disclosed herein is heated in a microwave oven, a label-adhered portion of the top seal of this container is heated and then softened. Then, holes are formed in this portion under the actions of a stress applied in response to the notch being gradually opened and of an increasingly higher internal pressure. Through these holes and the open-notch portion of the label may be successfully discharged water vapor generated from the heated contents. Any container having a top seal to which the label disclosed herein has been adhered may successfully dispense with such a troublesome labor as always having to partly peel off the top seal before heating in a microwave oven. Conventionally, users of containers of the known art may happen to forget this routine work before heating, which may involve the risk of breakage or damage of the containers. According to the container disclosed herein, holes may be formed in the label-adhered portion of the tops seal, and water vapor generated from the heated contents may be successfully discharged therethrough. Thus, the risk of the container being broken or damaged may be avoidable.

### [EFFECTS OF THE INVENTION]

When a container having a top seal to which the label disclosed herein has been adhered is heated in a microwave oven, a label-adhered portion of the top seal may be softened and weakened under heat, and holes are formed in this portion under the actions of a stress applied in response to the label's notch being gradually opened and of an increasingly higher internal pressure. Then, water vapor generated from the heated contents may be discharged through these holes and the opened notch-portion of this label.

Any container having a top seal with the label disclosed herein being adhered thereto may successfully dispense with such a troublesome labor as always having to partly peel off the top seal before heating in a microwave oven. Conventionally, users of containers of the known art may happen to forget this routine work before heating, which may involve the risk of breakage or damage of the containers. According to the container disclosed herein, holes may be formed in the label-adhered portion of the tops seal, and water vapor generated from the heated contents may be discharged through these holes. Thus, the risk of the container being broken or damaged may be avoidable.

### BRIEF DESCRIPTION OF DRAWINGS

Fig. 1 is a plan view of a container according to an embodiment of this disclosure.
Fig. 2 is a schematic view in cross section along Line A-A in Fig. 1.
Fig. 3A is a schematic view in cross section of an enlarged principal portion of a label before being adhered to the container of Fig. 1.
Fig. 3B is a plan view of the enlarged principal portion of the label before being adhered to the container of Fig. 1.
Fig. 4 is a photograph showing a label-adhered portion of the container's top seal before being heated in a microwave oven.
Fig. 5 is a photograph showing the label-adhered portion of the container's top seal after being heated in a microwave oven.
Fig. 6A is a schematic view in cross section illustrated correspondingly to Fig. 3A according to another embodiment of this disclosure.
Fig. 6B is a plan view illustrated correspondingly to Fig. 3B according to another embodiment of this disclosure.
Fig. 7A is a schematic view in cross section illustrated correspondingly to Fig. 3A according to yet another embodiment of this disclosure.
Fig. 7B is a plan view illustrated correspondingly to Fig. 3B according to yet another embodiment of this disclosure.
Fig. 8A is a schematic view in cross section illustrated correspondingly to Fig. 3A according to yet another embodiment of this disclosure.
Fig. 8B is a plan view illustrated correspondingly to Fig. 3B according to yet another embodiment of this disclosure.
Fig. 9A is a schematic view in cross section illustrated correspondingly to Fig. 3A according to yet another embodiment of this disclosure.
Fig. 9B is a plan view illustrated correspondingly to Fig. 3B according to yet another embodiment of this disclosure.

### DESCRIPTION OF EMBODIMENTS

An embodiment of this disclosure is hereinafter described in detail wit reference to the accompanying drawings.

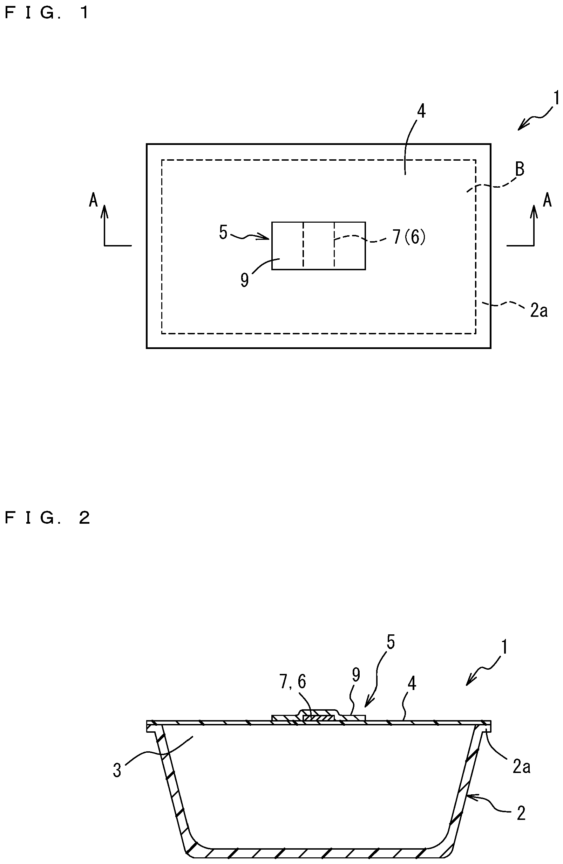

Fig. 1 is a plan view of a label-adhered container according to an embodiment of this disclosure. Fig. 2 is a schematic view in cross section along Line A-A in Fig. 1.

A container 1 according to this embodiment includes a body 2 containing, for example, precooked food to be heated in a microwave oven (the contents are not illustrated in the drawings). The container 1 further includes a top seal 4 and a transparent label 5 adhered to the top seal 4. The top seal 4 is a piece of film prepared as lid to seal an upper opening 3 of the body 2.

The container 1 is a top-seal container in which the top seal 4 is heat-sealed to an upper surface of a flange 2a formed around the upper opening 3 of the body 2.

The body 2 and the top seal 4 are both made from a synthetic resin(s), examples of which may include polypropylene (PP), polyethylene (PE) and polyethylene terephthalate (PE).

This embodiment provides the following technical features that allow the contents-housed container 1 to be heated in a microwave oven without having to partly peel off the top seal 4.

The label 5 according to this embodiment is adhered to the top seal 4 of the container 1.

This label 5 adhered to the container 1 is aimed at the formation of holes in a portion, to which the label 5 has been adhered, of the top seal 4 through microwave-heating of the container 1 to discharge water vapor generated from the heated contents through these holes.

In this embodiment, the label 5 rectangular in plan view is adhered to a center part of the top seal 4.

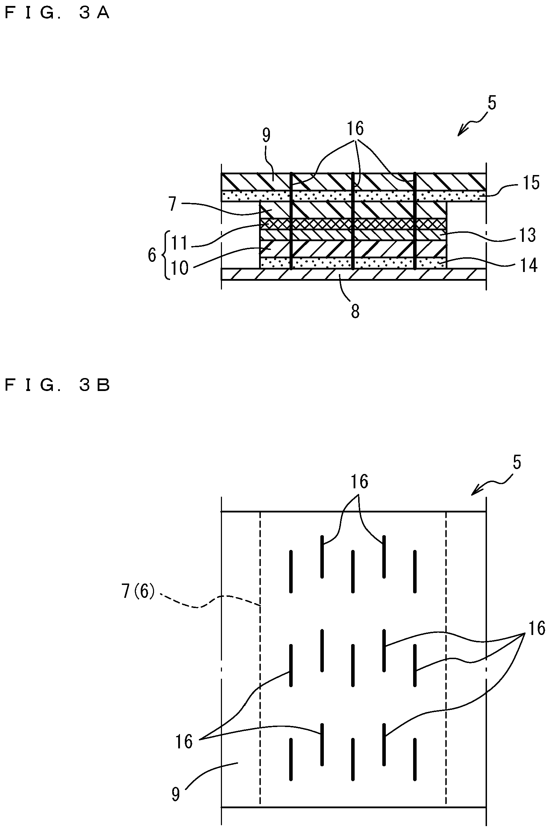

Figs. 3A and 3B are drawings that illustrate a principal portion of the label 5 before being adhered to the container 1, i.e., currently tentatively adhered to a separator 8. Fig. 3A is a schematic view in cross section of an enlarged principal portion of the label 5. Fig. 3B is a plan view of the enlarged principal portion of the label 5. In the illustration of Fig. 3A, a second base film 9 is spaced apart from the separator 8 to help the layers of this label to be easily grasped.

The label 5 according to this embodiment includes a laminated body 6 intended to serve heat generation and shrinkage, a first base film 7 formed on the laminated body 6, and a second base film 9. The second base film 9 is greater in area dimension than the first base film 7 and covers the first base film 7 to ensure that the first base film 7 is stabilized on the top seal 4. The label 5 is tentatively adhered to and peelable off the separator 8.

The laminated body 6 includes a heat-shrinkable film 10 and a thermal ink layer 11 that are stacked in layers. The heat-shrinkable film 10 is allowed to shrink when heat is applied thereto. The thermal ink layer 11 is a thermal layer that generates heat through microwave absorption. The heat-shrinkable film 10 and the thermal ink layer 11 are adhered to each other with a bonding layer 13 being interposed therebetween. The heat-shrinkable film 10 is adhered to the separator 8 with a first adhesive layer 14 being interposed therebetween. The heat-shrinkable film 10 is, however, only tentatively adhered to and is later peelable off the separator 8.

The first base film 7 formed on the laminated body 6 is a rectangular film in plan view having an equal outer size to the layers of the laminated body 6. The first base film 7 is a non-heat shrinkable film that does not shrink under heat.

The second base film 9 is a rectangular film in plan view having a greater area dimension than the first base film 7. A second adhesive layer 15 is formed e has a second adhesive layer 15 on its back-surface side, i.e., on one side of the second base film 9 closer to the first base film 7. The second base film 9 covers the first base film 7 on the laminated body 6 with the second adhesive layer 15 being interposed therebetween and is tentatively adhered to the separator 8

The second base film 9 covers the whole surface of the first base film 7 and extends from opposing long sides of the first base film 7.

The label 5 has a plurality of notches 16 penetrating through this label from the second base film 9 on the front-surface side as far as the heat-shrinkable film 10 and the first adhesive layer 14 on the back-surface side.

These notches 16 are each formed in the form of a line that extends in a direction intersecting at substantially the right angle (vertical direction in Fig. 3B) with a direction of the heat-induced shrinkage of the heat-shrinkable film 10 (lateral direction in Figs. 3A and 3B). The number, shape, and size of each notch 16 are not particularly limited but are optionally selectable.

As described earlier, the first base film 7 and the second base film 9 are non-heat shrinkable films, which are unaffected and unshrinkable when heat is applied thereto. These non-heat shrinkable films are made from such a material(s) as polyethylene terephthalate (PE) and/or polypropylene (PP).

The heat-shrinkable film 10 of the laminated body 56 is a shrinkable film that shrinks under heat. This heat-shrinkable film 10 may be, for example, a uniaxially oriented, heat-shrinkable polyethylene terephthalate (PET) film.

The heat-shrinkable film is not necessarily limited to such a uniaxially oriented, heat-shrinkable PET film. Other examples of this film may include the following films; heat-shrinkable polystyrene (PS) film, heat-shrinkable polyethylene (PE) film, heat-shrinkable polypropylene (PP) film, heat-shrinkable polyvinyl chloride (PV) film, and hybrid polyvinyl chloride film including, for example, PS (polystyrene) and PET (polyethylene terephthalate) films stacked in layers. The heat-shrinkable film 10 may be selected from biaxially oriented films instead of uniaxially oriented films.

When the container 1 is heated in a microwave oven, the heat-shrinkable film 10 shrinks and deforms, pulling the notches 16 from their sides to allow them to open.

The thermal ink layer 11 is made from a thermal ink that generates heat through microwave absorption. The thermal ink contains an electrically conductive material allowed to absorb microwave and thereby generate heat. The electrically conductive material may be selected from electrically conductive organic compounds including, for example, carbon black, silver, aluminum, ITO (indium tin oxide), and polyanilines.

In this embodiment, the thermal ink layer 11 is formed by printing technique on the lower surface of the first base film 7 using a thermal ink.

The label 5 is peeled off the separator 8 and adhered to the top seal of the container 1 illustrated in Fig. 1. When this container 1 is heated in a microwave oven, holes may be formed in a portion of the top seal 4 to which the label 5 has been adhered. Then, water vapor generated from the heated contents may be discharged through these holes.

The holes formed in the label 5-adhered part of the top seal 4 are assumed to be formed as described below.

The container 1 is heated in a microwave oven after having the label 5 adhered to its top seal 4. Then, the thermal ink layer 11 of the laminated body 6 on the back-surface side of the label 5 generates heat through microwave absorption before the internal pressure of the container 1 starts to rise. The heat thus generated may serve to heat and soften the first and second base films 7 and 9 and may also heat and soften the heat-shrinkable film 10 below the films 7 and 9 and the top seal 4 as well.

The heat-shrinkable film 10 thus heated may start to shrink, and the notches 16, which are linearly formed and substantially orthogonal to the direction of this shrinkage, may be pulled from their sides under the action of and in the direction of this shrinkage (direction in which the notches are opened). As a result, these notches are widely opened. When the notches 16 of the heat-shrinkable film 10 are opened correspondingly to the shrinkage, the first base film 7 above the film 10 may avoid unwanted deformation of the heat-shrinkable film 10, for example, may successfully prevent rolling up of this film. Then, the notches 16 may be allowed to smoothly and widely open.

As the notches 16 formed in the heat-shrinkable film 10 are further opening, the notches 16 formed in the upper layers; first base film 7 and second base film 9, are opening likewise.

The top seal 4 below the heat-shrinkable film 10 has already been heated and thereby softened, and this heating effect is accelerated by efficient heat transmission from the thermal ink layer 11 through the opened notches 16 of the heat-shrinkable film 10. A portion of the top seal 4 that correspond to the notches 16 of the heat-shrinkable film 10 is subject to a stress applied in response to these notches 16 being gradually opened. This portion is also affected by an increasingly higher internal pressure which is elevated by water vapor generated from the heated contents of the container 1.

Thus, the portion of the top seal 4, which is thus heated and softened and then weakened, is swollen upward by an increasingly higher internal pressure resulting from water vapor generated from the heated contents, in which holes may be formed. Then, water vapor generated from the heated contents may be successfully discharged out through these holes and the opened notches 16 of the label 5.

When the container 1 having the label 5-attrached top seal 4 is heated in a microwave oven, the label-adhered portion of the top seal 4 is heated and then softened, and holes may be formed in this portion under the actions of a stress applied in response to the notches 16 of the label 5 being gradually opened and of an increasingly higher internal pressure. Thus, water vapor generated from the heated contents may be discharged through the holes and the opened notches 16 of the label 5.

The container 1 having the label 5-attrached top seal 4 may dispense with sch a troublesome labor as having to partly peel off the top seal 4. Conventionally, users of containers of the known art may happen to forget this routine work before heating, which may involve the risk of breakage or damage of the containers. According to the container 1 disclosed herein, holes may be formed in the label 5-adhered portion of the tops seal 4, and water vapor generated from the heated contents may be successfully discharged through these holes. Thus, the risk of the container 1 being broken or damaged may be avoidable.

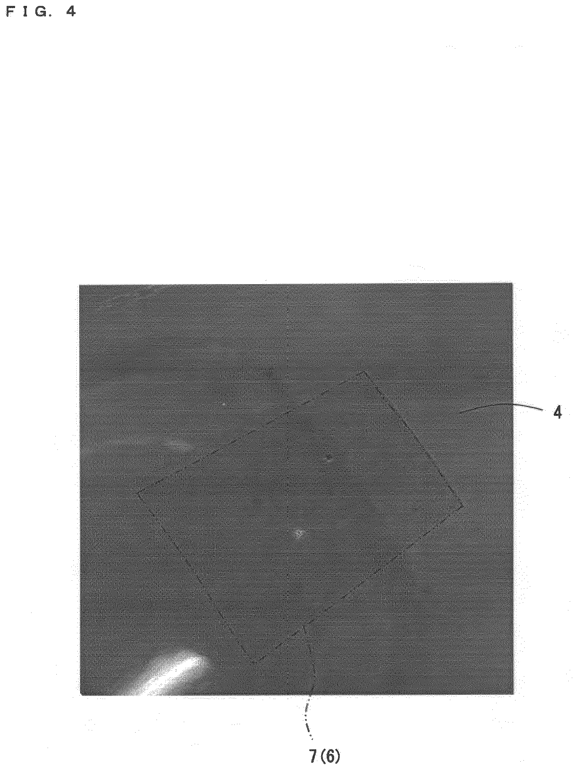

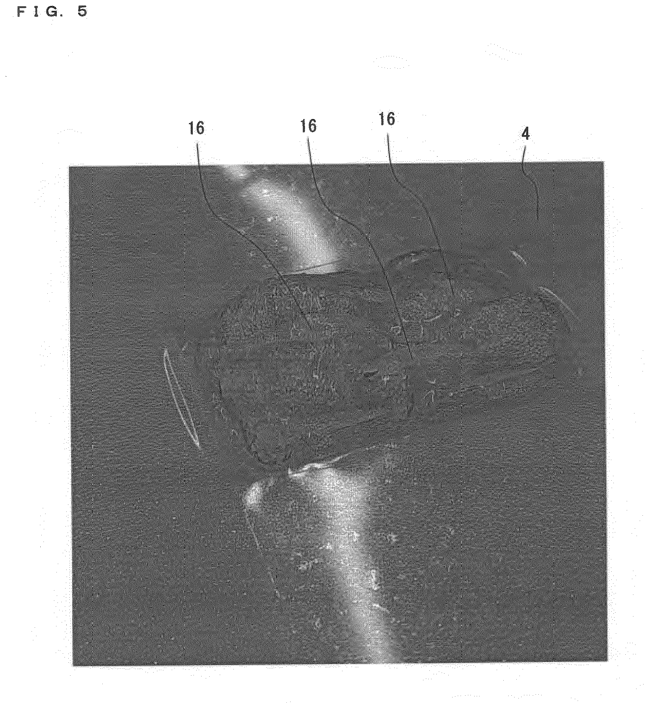

Fig. 4 is a photograph of showing a portion of the container 1 in the vicinity of the first base film 7 to which the label 5 has been adhered before this container is heated in a microwave oven. Fig. 5 is a photograph showing the label 5-adhered portion of the container 1 in the vicinity of the first base film 7 after this container is microwaved. In Fig. 4, a rectangular region corresponding to the first base film 7 is defined with a virtual line.

The container 1 heated then was filled with 100 g of water and microwaved at 1500 watt for 40 seconds.

As indicated by Fig. 5, a region of the top seal 4 to which the first base film 7 of the label 5 was adhered was affected more aggressively than the other regions by heat generated from the thermal ink layer 11 of the laminated body 6. This region was thus heated and softened and then weakened and was, therefore, swollen upward by an increasingly higher internal pressure resulting from water vapor generated from the heated contents. A portion of the label 5 where the notches 16 were formed and opened, on the other hand, was not as swollen as the other portions because of water vapor being discharged through the holes formed in the top seal 4 and the opened notches 16.

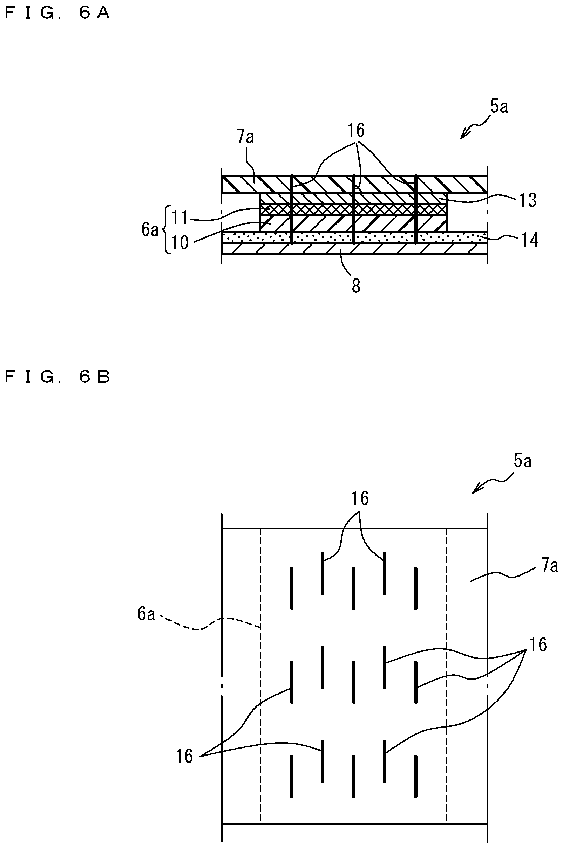

Figs. 6A and 6B are drawings of a label 5a according to another embodiment of this disclosure. These drawings respectively illustrated correspondingly to Figs. 3A and 3B. Fig. 6A is a schematic view in cross section of a principal portion of the label 5a. Fig. 6B is a plan view of the principal portion of the label 5a. In the illustration of Fig. 6A, a first base film 7a is spaced apart from the separator 8 to help the layers of this label to be easily grasped.

The label 5a according to this embodiment has a first base film 7a alone without the second base film 9. The first base film 7a is formed on a laminated body 6a and is greater in area dimension than the laminated body 6a.

In the laminated body 6a, the thermal ink layer 11 is formed by printing technique on the upper surface of the heat-shrinkable film 10 using a thermal ink. The heat-shrinkable film 10 having the thermal ink layer 11 formed thereon is adhered to the first base film 7a with the bonding layer 13 being interposed therebetween. Thus, the thermal ink layer 11 is formed between the first base film 7a and the heat-shrinkable film 10.

When the label 5a is peeled off the separator 8 and adhered to the top seal 4 of the container 1, the layers of the label 5a and the top seal 4 are arranged in the following order; first base film 7a, bonding layer 13 thermal ink layer 11, heat-shrinkable film 10, first adhesive layer 14 and top seal 4, from the front-surface side (upper side) of this label.

The container 1 thus having the label 5a being adhered to its top seal 4 is heated in a microwave oven. Then, the thermal ink layer 11 of the laminated body 6a starts to generate heat before the internal pressure of the container 1 starts to rise. The heat thus generated may serve to heat and soften the upper first base film 7a and may also heat and soften the lower heat-shrinkable film 10. Further, the heated heat-shrinkable film 10 shrinks, forcing the notches 16 to open. Then, the notches 16 of the first base film 7a penetrating through the label 5a may start to open as well.

The heat-shrinkable film 10 below the thermal ink layer 11 shrinks, forcing the notches 16 to open. Then, heat from the thermal ink layer 11 is efficiently transmitted through these opened notches 16 to the lower top seal 4. This may accelerate heating of the top seal 4, allowing the top seal 4 to be softened and weakened. The top seal 4 may be then subject to a stress generated by the notches of the heat-shrinkable film 10 being opened and may also be affected by an increasingly higher internal pressure elevated by water vapor generated from the heated contents.

As a result, holes may be formed in a portion of the top seal 4 corresponding to the notches 16 softened and weakened by heating, and water vapor generated from the heated contents is discharged out of the label 5a through these holes and the opened notches 16 of the label 5a.

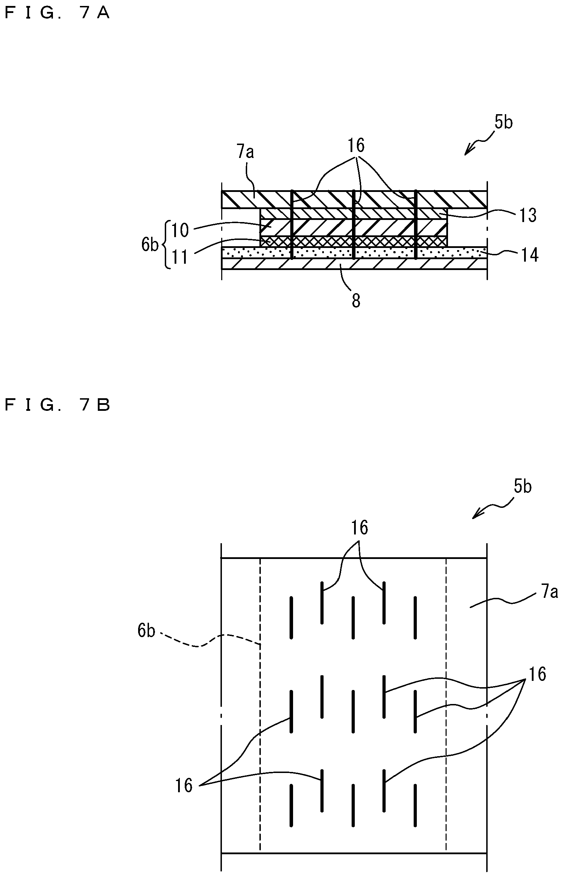

Figs. 7A and 7B are drawings of a label 5b according to yet another embodiment of this disclosure. These drawings are respectively illustrated correspondingly to Figs. 3A and 3B. Fig. 7A is a schematic view in cross section of a principal portion of the label 5b. Fig. 7B is a plan view of the principal portion of the label 5b.

In the label 5a of the embodiment illustrated in Figs. 6A and 6B, the laminated body 6a has the thermal ink layer 11 on the upper surface of the heat-shrinkable film 10. A laminated body 6b according to this embodiment, on the other hand, has the thermal ink layer 11 on the lower surface of the heat-shrinkable film 10. The heat-shrinkable film 10 is formed between the first base film 7a and the thermal ink layer 11.

When the label 5b is peeled off the separator 8 and adhered to the top seal 4 of the container 1, the layers of the label 5b and the top seal 4 are arranged in the following order; first base film 7a, bonding layer 13, heat-shrinkable film 10, thermal ink layer 11, first adhesive layer 14 and top seal 4, from the front-surface side (upper side) of this label.

The container 1 thus having the label 5b being adhered to its top seal 4 is heated in a microwave oven. Then, the thermal ink layer 11 of the laminated body 6b may start to generate heat before the internal pressure of the container 1 starts to rise. The heat thus generated may serve to heat and soften the lower top seal 4 and may also heat and soften the upper heat-shrinkable film 10 and first base film 7a. Further, the heated heat-shrinkable film 10 shrinks, forcing the notches 16 to open. This may also open the notches 16 of the first base film 7a penetrating through the label 5b.

The top seal 4 may be then subject to a stress generated by notches of the upper heat-shrinkable film 10 being opened and may also be affected by an increasingly higher internal pressure resulting from water vapor generated from the heated contents. Then, holes may be formed in a portion of the top seal 4 corresponding to the notches 16 softened and weakened by heating. As a result, water vapor generated from the heated contents may be discharged out of the label 5bthrough these holes and the opened notches 16 of the label 5b.

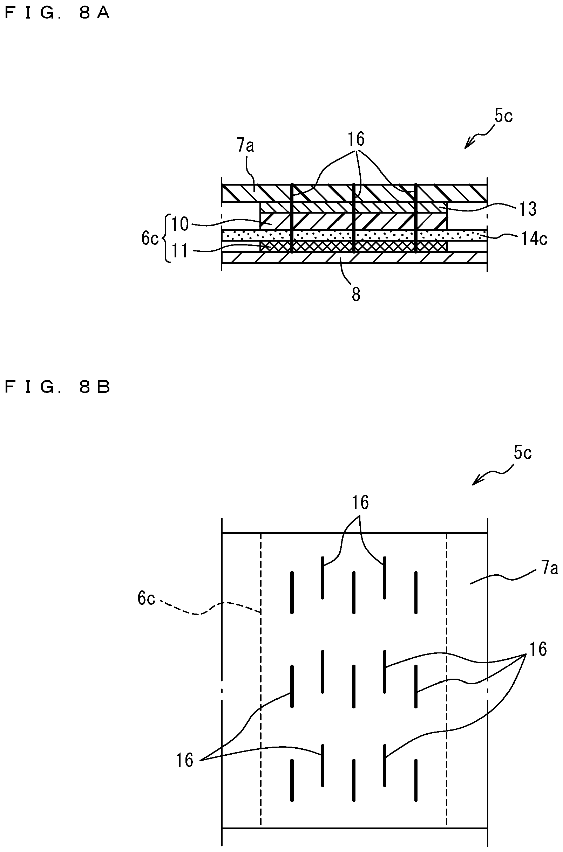

Figs. 8A and 8B are drawings of a label 5c according to yet another embodiment of this disclosure. These drawings are respectively illustrated correspondingly to Figs. 3A and 3B. Fig. 8A is a schematic view in cross section of a principal portion of the label 5c. Fig. 8B is a plan view of the principal portion of the label 5b.

In this embodiment, a first adhesive layer 14c is formed between the thermal ink layer 11 and the heat-shrinkable film 10 of the laminated body 6c, i.e., the thermal ink layer 11 is formed on the lower surface of the first adhesive layer 14c facing the top seal 4.

When the label 5c is peeled off the separator 8 and adhered to the top seal 4 of the container 1, the layers of the label 5c and the top seal 4 are arranged in the following order; first base film 7a, bonding layer 13, heat-shrinkable film 10, thermal ink layer 11, first adhesive layer 14 and top seal 4, from the front-surface side (upper side) of this label.

The container 1 thus having the label 5v being adhered to its top seal 4 is heated in a microwave oven . The top seal 4 may be directly heated under heat generated by the thermal ink layer 11 in contact with the top seal 4, and the top seal 4 may be thereby efficiently softened and weakened. The weakened portion of the top seal 4 may be then subject to a stress generated by the notches of the upper heat-shrinkable film 10 being opened as a result of shrinkage and may also be affected by an increasingly higher internal pressure. As a result, holes may be formed in a portion of the top seal 4 corresponding to the notches 16, and water vapor generated from the heated contents may be discharged out of the label 5c through these holes and the opened notches 16 of the label 5c.

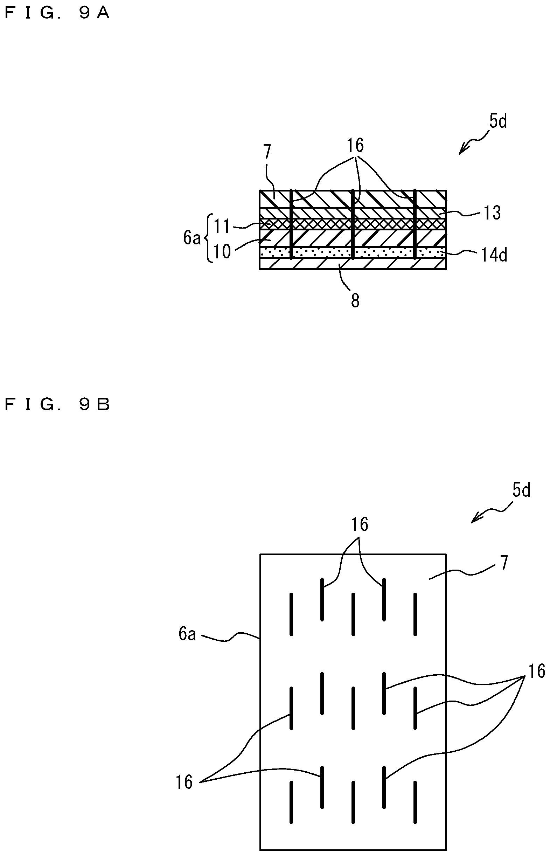

In the embodiments described thus far, the first bae film 7a or the second base film 9 is greater in area dimension than the laminated body 6, 6a, 6b, 6c and is adhered to the top seal 4 so as to cover the laminated body. In other embodiments of this disclosure, the first base film 7 may be equal in outer size to the laminated body 6a, as illustrated in Figs. 9A and 9B.

In the technology disclosed herein, the technical features described in the embodiments may be suitably combined. In the label 5 of Figs. 3A and 3B having the first and second base films 7 and 9, for example, the layers of the laminated body lower than the first base film 7 may be the same as or similar to those described in the embodiment illustrated in Figs. 7A and 7B.

The label described herein may be optionally shaped or sized or may be adhered to the top seal after various pieces of information are printed on this label. The label described herein may be formed in a very small size and adhered to the top seal at any unnoticeable position.

The label of this disclosure, when adhered to the top seal of any top-seal container of the known art, may facilitate the formation of holes in the top seal and allow water vapor generated from the heated contents to be successfully discharged out of the label. This label may be useful with, for example, food-containing, top-seal containers to be microwaved and sold in convenience stores.

### REFERENCE SIGNS LIST

- 1: container
- 2: body
- 3: upper opening
- 4: top seal
- 5, 5a, 5b, 5c: label
- 6a, 6b, 6c: laminated body
- 7, 7a: first base film
- 8: separator
- 9: second base film
- 10: heat-shrinkable film
- 14, 14c, 14d: first adhesive layer
- 15: second adhesive layer
- 16: notch

## Claims

1. A label, comprising:
a base film unshrinkable under heat; and
a laminated body at least including a heat-shrinkable film and a thermal layer, the laminated body being disposed on a back-surface side of the base film,
the heat-shrinkable film being allowed to shrink under heat,
the thermal layer being allowed to generate heat through microwave absorption,
the label further comprising a notch that penetrates therethrough from the base film on a front-surface side to the heat-shrinkable film of the laminated body.

2. The label according to claim 1, wherein
the thermal layer of the laminated body is formed between the base film and the heat-shrinkable film.

3. The label according to claim 1, wherein
the heat-shrinkable film of the laminated body is formed between the base film and the thermal layer.

4. The label according to claim 3, further comprising an adhesive layer for adhesion of the label, wherein
the adhesive layer is formed between the thermal layer and the heat-shrinkable layer of the multilayered body.

5. The label according to one of claims 1 to 3, wherein
the thermal layer of the laminated body is formed on one surface or another surface of the heat-shrinkable film.

6. The label according to claim 5, wherein
the base film is greater in area dimension than the laminated body and covers the laminated body, and
an outer peripheral edge of the base film extends more outward than the laminated body.

7. The label according to claim 5, wherein
the base film is a first base film, the first base film being formed on the laminated body,
the label further comprises a second base film greater in area dimension than the first base film, the second base film covering the first base film and having an outer peripheral edge extending more outward than the first base film, and
the notch formed extends from the second base film on the front-surface side to the heat-shrinkable film of the laminated body.

8. The label according to claim 5, wherein
the thermal layer is a thermal ink layer that generates heat through microwave absorption.

9. The label according to claim 5, wherein
the notch formed extends along a direction that intersects with a direction in which the shrinkage occurs in response to the heat-shrinkable film of the laminated body being heated.

10. A container, comprising:
a body, the body comprising an opening on an upper side thereof,
a top seal joined to the body; and
the label according to claim 5 adherable to the top seal.
